Europäisches Patentamt

European Patent Office

Office européen des brevets

(19)

(11) Numéro de publication: **0 121 458**

**A1**

(12) **DEMANDE DE BREVET EUROPEEN**

(21) Numéro de dépôt: **84400435.8**

(22) Date de dépôt: **05.03.84**

(51) Int. Cl.³: **H 04 N 9/40**

(30) Priorité: **07.03.83 FR 8303712**

(43) Date de publication de la demande:
**10.10.84 Bulletin 84/41**

(84) Etats contractants désignés:
**AT BE CH DE GB IT LI LU NL SE**

(71) Demandeur: **S.A. DEMIA**
**3 boulevard Pasteur**
**Luxembourg(LU)**

(84) Etats contractants désignés:
**BE CH DE GB IT LI NL SE AT**

(71) Demandeur: **SODECOM**
**15 bis rue de Marignan**
**F-75008 Paris(FR)**

(84) Etats contractants désignés:
**LU**

(72) Inventeur: **Mikrut, Antoine**
**37 rue Reuilly**
**F-75012 Paris(FR)**

(74) Mandataire: **Beauchamps, Georges et al,**
**Cabinet Z.Weinstein 20, avenue de Friedland**
**F-75008 Paris(FR)**

(54) Système de traitement des signaux de télévision en couleur, notamment du type SECAM.

(57) La présente invention concerne un système de traitement de signaux de télévision en couleur.

Selon l'invention, les moyens générateurs des sous-porteuses de chrominance et de la porteuse de luminance comportent trois oscillateurs (3), (4) et (5) dont au moins les oscillateurs générateurs (3) et (5) des sous-porteuses de chrominance sont adaptés pour produire des fréquences à un multiple des fréquences sous-porteuses de chrominance classiques.

L'invention s'applique aux téléviseurs en couleur.

_Fig. 2_

EP 0 121 458 A1

Croydon Printing Company Ltd.

- 1 -

Système de traitement des signaux de télévision en
couleur, notamment du type SECAM.

La présente invention a pour objet un système de traitement de signaux de télévision en couleur, notamment
du type SECAM, en vue de leur application à un dispositif récepteur tel qu'un récepteur de télévision en
couleur, un magnétoscope ou analogue, ce système comprenant des moyens générateurs de sous-porteuses pour
les signaux de chrominance et de la porteuse du signal
de luminance.

Il est bien connu que les systèmes classiques destinés
au traitement des signaux de chrominance et de luminance, du type SECAM, sont fondés sur l'utilisation de
deux sous-porteuses de couleur respectivement de 4,406
et 4,25 MHz qui transmettent alternativement les
signaux de chrominance $D_R$ d'une ligne et les signaux
de chrominance $D_B$ de la ligne suivante. Les sous -
porteuses sont modulées en fréquence. A cette fin les
signaux de chrominance sont appliqués à un étage modulateur, au moyen d'un commutateur électronique. Avant
d'être mélangés aux signaux de luminance et de synchronisation, les signaux de chrominance sont appliqués à
un filtre limiteur de bande, réduisant le bruit de fond,
du type à courbe anticloche. Puis les signaux sont
transmis au dispositif récepteur, par exemple à l'aide
d'un câble. Le dispositif récepteur comprend un décodeur nécessairement équipé de filtres en cloche, d'une bifurcation entre une voie retardée d'une durée de ligne et une voie directe, et d'un commutateur piloté par une bascule synchronisée par les signaux de synchronisation de ligne pour aiguiller les informations de chrominance reçues sur une voie de sous-porteuse de l'information $D_R$ et une voie de sous-porteuse de l'information $D_B$.

Ces systèmes connus ont un certain nombre d'inconvénients. Ainsi, on constate un manque de définition des couleurs provenant du fait que la bande passante de transmission des informations de chrominance est de l'ordre de 300 kHz, donc très faible, ce qui est très insuffisant pour une définition de couleurs convenable et ne permet pas la transmission d'un ou de plusieurs mots binaires codés par exemple selon le mode "N.R.Z." (non retour à zéro). D'autre part, dans ces systèmes les signaux de chrominance sont soumis à un nombre d'opérations relativement important, ce qui provoque chaque fois une perte d'information.

La présente invention a pour objectif de pallier ces inconvénients.

Pour atteindre ce but, le système de traitement selon la présente invention est caractérisé en ce que les moyens générateurs des sous-porteuses de chrominance et de la porteuse de luminance comportent trois oscillateurs dont au moins les oscillateurs générateurs des sous-porteuses de chrominance sont adaptés pour produire des fréquences représentant un multiple des fréquences de sous-porteuse de chrominance classiques du système SECAM, pour élargir la largeur de la bande de transmission d'information pour permettre également la transmission de mots binaires, les oscillateurs étant synchronisés sur un même signal d'horloge de haute fréquence.

Suivant une caractéristique avantageuse de l'invention, le système selon l'invention comprend un oscillateur générateur d'un signal de haute fréquence formant une horloge générale et produisant ledit signal d'horloge et en ce que les signaux de synchronisation de ligne, de trame, de demi-ligne et les signaux d'horloge pour la synchronisation des oscillateurs précités sont dérivés du signal d'horloge général par division de fréquence.

Suivant une autre caractéristique avantageuse, les tensions d'alimentation en continu du système sont dérivées de l'horloge générale par l'intermédiaire d'un dispositif comprenant un diviseur de fréquence du signal d'horloge et un convertisseur fréquence-tension.

Suivant encore une autre caractéristique de l'invention, la tension d'alimentation en tension continue pour les oscillateurs précités est obtenue à l'aide du diviseur de fréquence du signal d'horloge et d'un amplificateur saturé, au régime de tout ou rien, qui est alimenté par la tension stabilisée produite par un convertisseur numérique-analogique à partir d'un chiffre binaire.

L'invention sera mieux comprise et d'autres buts, caractéristiques, détails et avantages de celle-ci apparaîtront plus clairement au cours de la description explicative qui va suivre faite en référence aux figures annexées données uniquement à titre d'exemple illustrant un mode de réalisation de l'invention.

La figure 1 est un schéma bloc d'un dispositif de traitement selon l'invention ; et

La figure 2 montre les signaux traités selon l'invention.

Dans le schéma représenté, on reconnaît en 1 un dispositif de prise de vue d'une caméra de télévision en
couleur et en 2 le dispositif des trois matrices destiné
à produire à leur sortie les signaux de chrominance,
c'est-à-dire de différence de couleur $D_R = E'_R - E'_Y$,
$D_B = E'_B - E'_Y$ et le signal de luminance $E'_Y$ du type
SECAM.

Le système de traitement selon la présente invention
comporte trois oscillateurs 3, 4 et 5 avantageusement
à quartz, qui sont contrôlés en tension. Les oscillateurs 3 et 5 sont destinés à produire respectivement
des fréquences sous-porteuses pour les signaux de
chrominance $D_R$ et $D_B$, tandis que l'oscillateur 4 engendre la porteuse du signal de luminance. Selon l'invention les oscillateurs 3 et 5 sont adaptés pour produire
des sous-porteuses ayant des fréquences égales à un
multiple des sous-porteuses classiques de 4,406 et 4,25
MHz du système SECAM. Le rapport des sous-porteuses
engendrées par les oscillateurs 3 et 5 est identique
au rapport des sous-porteuses classiques susmentionnées,
pour assurer la compatibilité du système selon l'invention avec les systèmes classiques. Bien entendu les
sous-porteuses sont modulées en fréquence par les
signaux $D_R$ et $D_B$.

Grâce à l'utilisation de sous-porteuses de chrominance
ou de couleur ayant une fréquence multiple par rapport
aux sous-porteuses classiques, la bande passante de
transmission de données est suffisamment large pour
assurer une bonne définition des couleurs et pour
permettre la transmission d'un ou de plusieurs mots
binaires codés par exemple selon le mode "N.R.Z." (non
retour à zéro), connu en soi et appliqué par exemple
au système télétexte ANTIOPE. De plus, le traitement
ultérieur à appliquer aux sous-porteuses modulées en
fréquence se limite à des opérations de division de fréquence, ce qui ne provoque qu'une perte d'information simple, mais assure une stabilité multiple.

Le système de traitement représenté comprend en outre trois convertisseurs analogiques-numériques 10, 11, 12 chacun étant destiné au traitement d'un des trois signaux $D_R$, $D_B$ et Y'. Chaque convertisseur est directement relié à la sortie d'une des trois matrices de la caméra de télévision. En aval de chaque convertisseur 10 à 12 on constate la présence d'un circuit d'aiguillage respectivement 13, 14 et 15 reliant le convertisseur auquel il est associé à un bus de données de sortie 17, 18 et 19 soit directement soit par l'intermédiaire d'un dispositif d'élimination de parasites 20, 21 ou 22. Etant donné que sur chaque bus les signaux numériques en code binaire produits par le convertisseur analogique-numérique 10, 11 ou 12 correspondant sont présents suivant une constellation en parallèle, on prévoit pour chacun des bus de données un convertisseur parallèle-série 24, 25 ou 26 destiné à convertir la constellation en parallèle en une constellation de signaux en série.

Chacun des dispositifs d'élimination de parasites 20, 21 et 22 comprend une unité de traitement 27 telle qu'un micro-ordinateur ou microprocesseur, deux mémoires vives 28, 29 destinées à stocker respectivement la trame entière qui est en train d'être produite par la caméra et la trame précédente, ainsi qu'une mémoire morte 30 contenant la routine pour l'unité de traitement. Cette dernière peut également être programmée pour assurer la production d'une tension continue d'alimentation très stable, à l'aide de moyens convertisseurs numériques - analogiques 31 à partir d'un chiffre binaire préalablement défini. Cette tension continue peut servir de tension de référence pour le système d'alimentation des différents éléments du dispositif de traitement proposé par l'invention et notamment pour la production de l'alimentation des oscillateurs 3, 4 et 5, à la manière qui sera décrite plus loin. La borne de sortie de cette tension est appliquée en 32.

Le dispositif d'élimination de parasites peut également être pourvu de moyens connus en soi permettant la correction d'erreurs contenues dans les signaux numériques portant sur plusieurs éléments binaires par exemple en assurant la présence d'un nombre prédéterminé d'états binaires dans chaque signal numérique. Le dispositif de traitement 27 permet l'accomplissement de cette fonction connue en soi. L'unité de traitement peut encore être adaptée pour produire un signal indicateur d'absence d'erreur dans les signaux numériques.

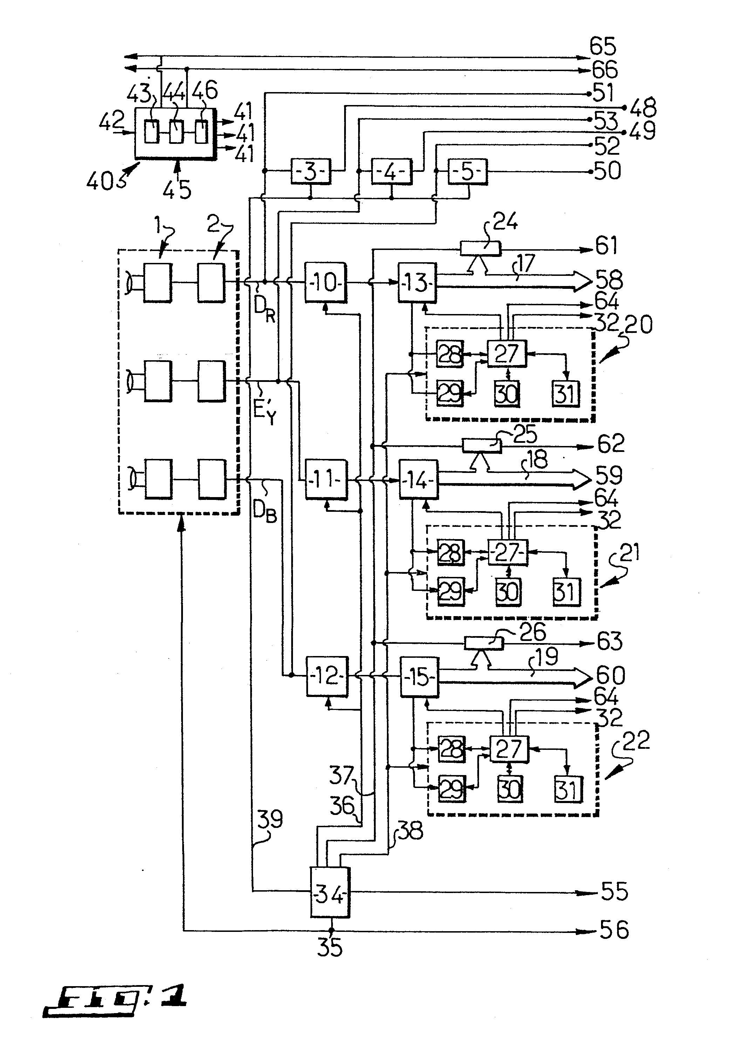

Pour assurer un parfait synchronisme du fonctionnement des différents éléments du système proposé par l'invention, celui-ci comprend un oscillateur à quartz 34 constituant un générateur de signaux de haute fréquence, par exemple de l'ordre de 100 MHz. Cet oscillateur accomplit la fonction d'une horloge générale. Comme le montre la figure 1, les signaux de synchronisation de ligne et de trame et de demi-ligne disponibles en 35 sont dérivés de l'horloge générale. Les convertisseurs analogiques-numériques 13 à 15, les convertisseurs parallèles-série 24 à 26 et les dispositifs d'élimination de parasites 20 à 22 sont également asservis à l'horloge. Les conducteurs des signaux d'horloge pour la commande de ces éléments sont indiqués respectivement en 36, 37 et 38. En 39, l'horloge générale 34 fournit les signaux de synchronisation des oscillateurs de sous-porteuse et de porteuse 3, 4, 5. Le synchronisme de ces oscillateurs est ainsi garanti par le fait que les signaux de synchronisation sont dérivés du même signal de haute fréquence. Il est à souligner que tous les signaux de synchronisation et de référence sont obtenus par division de la fréquence du signal d'horloge, ce qui garantit une stabilité parfaite des signaux ainsi obtenus et un synchronisme parfait de fréquence et de phase des oscillateurs 3, 4 et 5, et des signaux, c'est-à-dire de leur front avant, et ainsi de toutes les opérations effectuées par le système de traitement selon la présente invention. Pour assurer la stabilité de la fréquence de l'oscillateur d'horloge 34, par exemple pour empêcher toute dérivation thermique, cet oscillateur est monté dans une boucle de stabilisation (non représentée), comportant également les oscillateurs 3, 4 et 5.

Le dispositif d'alimentation en tension continue, désigné par le chiffre de référence 40 peut être conçu pour produire des tensions d'alimentation extrêmement stables pour les oscillateurs de sous-porteuse et de porteuse 3, 4 et 5. Ces tensions sont disponibles aux trois bornes de sortie 41 du dispositif d'alimentation. Comme cela est schématiquement indiqué sur la figure, les moyens générateurs des tensions d'alimentation des oscillateurs sont avantageusement dérivés du signal d'horloge de haute fréquence produit par l'horloge générale 34. Le dispositif d'alimentation 40 reçoit en 42 ce signal d'horloge de par exemple 100 MHz. Dans le dispositif 40 ce signal est divisé par un diviseur de fréquence schématiquement indiqué en 43 qui en produit un signal de par exemple 1 MHz. Celui-ci est appliqué à un amplificateur saturé 44 fonctionnant en régime de tout ou rien et alimenté de son côté en 45 par la tension continue très stable produite en 32 par l'un des dispositifs d'élimination de parasites 20, 21 ou 22. Un convertisseur 46 transforme le signal de sortie de l'amplificateur en une tension continue disponible aux sorties 41. Cette tension est parfaitement stable du fait qu'elle est dérivée de la fréquence horloge par division de fréquence, ce qui garantit déjà un haut degré de stabilité, et de la tension très stable produite par les dispositifs d'élimination de parasites à partir d'un chiffre binaire. L'amplitude de la tension de sortie est ainsi rigoureusement contrôlable. Il est encore à noter que le dispositif d'alimentation 40 est galvaniquement séparé du secteur par l'intermédiaire d'un transformateur (non représenté).

En se reportant à la figure 1, on constate que le système de traitement proposé par l'invention comporte aux bornes de sorties 48 à 50 des signaux de sortie des oscillateurs 3, 4 et 5, c'est-à-dire des sous-porteuses modulées par les signaux de chrominance et de la porteuse modulée par le signal de luminance. Des bornes de sortie 51, 52 et 53 sont prévues auxquelles peuvent être prélevés les signaux de chrominance et de luminance tels qu'ils ont été produits par la caméra de télévision en couleur. Le système comporte en outre des bornes de sortie 55, 56 auxquelles le signal d'horloge haute fréquence, produit par l'oscillateur 34 et les signaux de synchronisation de ligne et de trame et de demi-ligne peuvent être prélevés. Les symboles de référence 58 à 60 indiquent les bornes de sortie des bus de données 17 à 19 tandis qu'aux bornes 61 à 63 sont disponibles les signaux numériques en constellation en série. Le signal d'absence d'erreur est présent à la sortie 64. Les bornes 65 et 66 sont associées au dispositif d'alimentation 40 et désignent la masse et le potentiel d'alimentation.

Toutes les sorties susmentionnées ou au moins une partie essentielle de celles-ci peuvent être reliées à une prise du genre multibroche connectable à un dispositif récepteur tel que par exemple un magnétoscope, appareil de télévision en couleur standard, moniteur pour contrôle visuel et analogue. En prévoyant également une prise par exemple du type multibroche au côté entrée, le système peut constituer une unité autonome susceptible d'être montée entre une caméra de télévision en couleur et un dispositif récepteur approprié. Mais il serait également possible d'insérer ce système avec la caméra et le dispositif récepteur tel qu'un magnétoscope dans une même boîte pour former un genre de télécinéma, un ensemble de copies de film ou de documents quelconques.

Le fonctionnement du système selon l'invention ressort immédiatement de la description qui vient d'être faite et de la figure 1. Il n'est donc pas nécessaire de le décrire, à l'exception du fonctionnement des dispositifs d'élimination des parasites. Chacun de ces dispositifs fonction de la manière suivante :

Pour éliminer les parasites, l'unite de traitement 27, sous la commande de la routine stockée dans la mémoire morte 30 compare chaque trame à la trame précédente. Ces trames sont stockées respectivement dans les mémoires vives 28, 29. A la suite de cette opération de comparaison, tous les éléments d'image qui sont communs aux deux trames seront conservés. Par contre, les éléments non identiques seront éliminés. Il est à noter que les deux trames sont décalées dans le temps de 20 millisecondes. Les éléments représentatifs de parasites ne seront donc généralement plus les mêmes dans les deux trames. Par une programmation appropriée relativement simple, l'unité de traitement peut être adaptée pour distinguer une différence dans les deux trames, produites par un objet qui se déplace devant la caméra, d'une différence occasionnée par des parasites. En effet, l'objet en déplacement conserve son contour général, c'est-à-dire les éléments d'image qui le représentent conservent sensiblement leurs formes. Ils ont seulement changé de place sur les deux trames. Cette non- altération de la forme générale des éléments d'image et représentative d'un objet en déplacement, d'une trame à la trame suivante, permet de la distinguer des parasites qui sont aléatoires et donc en principe toujours différents d'une trame à l'autre. On comprend aisément que le dispositif d'élimination de parasites peut être rendu encore plus sophistiqué et sensible à des paramètres particuliers en le reliant à un calculateur externe programmé en conséquence.

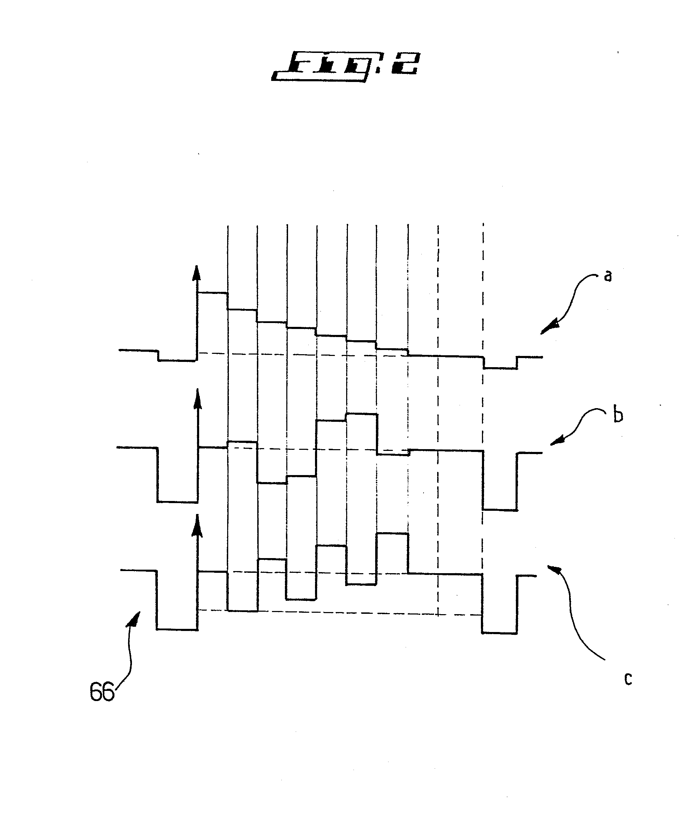

Une autre particularité de l'invention est illustrée à la figure 2. Cette dernière donne un oscillogramme d'une ligne correspondant à la mire de barres de 75 % d'amplitude (blanc à 100 %). En a, b et c on montre respectivement le signal de luminance et les signaux de chrominance par les couleurs (de gauche à droite) blanc, jaune, bleu-vert, vert, mauve, rouge, bleu, noir. On constate que chaque signal est précédé d'un top de synchronisation 66 qui présente un niveau plus faible que la valeur minimum du signal. Ceci signifie que les tops de synchronisation peuvent être identifiés avec certitude, ce qui contribue également à un parfait synchronisme.

Bien entendu, le système selon la présente invention, tel qu'il est représenté sur la figure 1 et tel qu'il vient d'être décrit peut être modifié de diverses manières sans sortir du cadre de la présente invention. Ainsi, les signaux de chrominance et de luminance n'ont pas besoin d'être pris à la sortie de la caméra. Ils peuvent être issus de tout autre dispositif émetteur. On pourrait également envisager d'appliquer aux oscillateurs générateurs des sous-porteuses 3 et 5 non pas les signaux de chrominance dans leur version analogique, mais dans leur forme numérique obtenue aux sorties des convertisseurs analogiques-numériques 10 à 13 et le cas échéant après le traitement par les dispositifs d'élimination de parasites. On obtiendrait de cette manière des signaux de sortie débarrassés de parasites aléatoires. Il est encore une fois à souligner que le choix
des fréquences de sous-porteuses devrait être faits de
telle manière que toutes les informations et signaux
désirés puissent être transmis et traités de façon
qu'ils présentent une haute définition et soient conservés dans l'état d'origine sans subir pratiquement aucune
détérioration. Le système pourrait permettre la transmission des signaux numériques de tout code approprié,
par exemple des signaux du type "N.R.Z." (non retour à
zéro), tels que les signaux appliqués pour le système
ANTIOPE.

Revendications

1. Système de traitement de signaux de télévision en couleur, notamment du type SECAM, en vue de leur application à un dispositif récepteur tel qu'un récepteur de télévision en couleur, un magnétoscope ou analogue, comprenant des moyens générateurs de sous-porteuses pour les signaux de chrominance et de la porteuse du signal de luminance, caractérisé en ce que les moyens générateurs des sous-porteuses de chrominance et de la porteuse de luminance comportent trois oscillateurs (3, 4, 5) dont au moins les oscillateurs générateurs (3, 5) des sous-porteuses de chrominance sont adaptés pour produire des fréquences représentant un multiple des fréquences sous-porteuses de chrominance classiques du système SECAM, pour élargir la largeur de la bande de transmission d'information avantageusement à une valeur permettant également la transmission de mots binaires, les oscillateurs (3, 4, 5) étant synchronisés sur un même signal d'horloge de haute fréquence.

2. Système selon la revendication 1, caractérisé en ce qu'il comprend un oscillateur générateur (34) de signaux de haute fréquence formant une horloge générale et produisant ledit signal d'horloge et en ce que les signaux de synchronisation de ligne, de trame et de demi-ligne et des oscillateurs (3, 4 et 5) ainsi que les signaux de référence du système sont dérivés du signal d'horloge par division de fréquence.

3. Système selon l'une des revendications 1 ou 2, caractérisé en ce qu'il comprend pour chaque signal de chrominance $D_R$, $D_B$ et le signal de luminance $E'_Y$ un convertisseur analogique-numérique (10, 11, 12) auquel est associé un dispositif d'élimination de parasites (20, 21, 22) par comparaison de deux trames successives, pour éliminer les parasites et les bruits de fond, les signaux d'horloge pour les convertisseurs et les dispositifs d'élimination de parasites étant dérivés de la haute fréquence produite par l'oscillateur formant horloge (34).

4. Système selon la revendication 3, caractérisé en ce que les informations de chrominance destinées à moduler en fréquence les sous-porteuses produites par les oscillateurs générateurs (3, 5) précités sont formées par les signaux de chrominance convertis en signaux numériques, produits par les convertisseurs analogiques-numériques (10, 11, 13), le cas échéant après élimination des parasites.

5. Système selon l'une des revendications précédentes, caractérisé en ce que les oscillateurs générateurs (3, 4, 5) des sous-porteuses de chrominance et de la porteuse de luminance sont formés par des oscillateurs contrôlés en tension, de préférence à quartz.

6. Système selon l'une des revendications précédentes, caractérisé en ce que les tensions d'alimentation en continu du système sont dérivées de l'horloge générale (34) par l'intermédiaire d'un dispositif (40) comprenant un diviseur de fréquence (43) du signal d'horloge et un convertisseur fréquence-tension (44).

7. Système selon la revendication 6, caractérisé en ce que le dispositif (40) précité comporte en outre entre le diviseur de fréquence (43) et le convertisseur (46) un amplificateur saturé en régime de tout ou rien, alimenté par une tension très stable formée à partir d'un chiffre binaire par un convertisseur numérique-analogique (31) avantageusement contenu dans un dispositif d'élimination de parasites (20, 21 ou 22) de préférence pourvu d'une unité de traitement (27).

-14-

8. Système selon l'une des revendications précédentes, caractérisé en ce qu'il comporte des bornes de sortie (48 à 50) auxquelles sont disponibles les signaux produits par les oscillateurs générateurs (3, 4, 5), avantageusement des bornes de sortie (51 à 53) auxquelles peuvent être prélevés les signaux de chrominance $D_R$, $D_B$ et de luminance $E'_Y$, avantageusement des bornes (58, 59, 60) pour les signaux de chrominance $D_R$, $D_B$ et de luminance $E'_Y$ en forme numérique et de préférence des bornes de sortie (55, 56) respectivement pour le signal d'horloge de haute fréquence produit par l'oscillateur formant horloge (34) et les signaux de synchronisation de ligne, de trame et de demi-ligne.

9. Système selon la revendication 8, caractérisé en ce que les bornes de sortie sont reliées à une prise du genre multibroche connectable à un dispositif récepteur tel qu'un magnétoscope, téléviseur en couleur standard ou moniteur pour contrôle visuel.

10. Système selon l'une des revendications précédentes, caractérisé en ce qu'il est réalisé sous forme d'une unité autonome connectable par des prises multibroches accessibles de l'extérieur à une caméra de télévision en couleur et un dispositif récepteur.

11. Système selon l'une des revendications 1 à 7, caractérisé en ce qu'il constitue avec les caméras de télévision en couleur (1, 2) et un dispositif récepteur tel qu'un magnétoscope une unité susceptible de former un genre de télécinéma, ensemble de copies de film ou de documents quelconques ou analogues.

12. Système selon l'une des revendications précédentes, caractérisé en ce que l'on prévoit au début de chaque ligne pour les signaux de luminance et de chrominance $D_R$, $D_B$ un top de synchronisation (66) qui a un niveau plus faible que la valeur minimum possible du signal.

_Fig:1_

0121458

_Fig. 2_

Office européen des brevets

**RAPPORT DE RECHERCHE EUROPEENNE**

0121458

Numéro de la demande

EP    84 40 0435

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-1 565 995   (TELEFUNKEN)<br><br>--- | | H 04 N   11/18 |
| A | L'ONDE ELECTRIQUE, vol. 47, no. 486, septembre 1967, pages 1111-1115, Paris, FR; G.MELCHIOR: "Codeur et décodeur pour le système SECAM"<br><br>----- | | |

**DOMAINES TECHNIQUES RECHERCHES (Int. Cl. ³)**

H 04 N

Le présent rapport de recherche a été établi pour toutes les revendications

| Lieu de la recherche<br>LA HAYE | Date d'achèvement de la recherche<br>05-07-1984 | Examinateur<br>ZANELLA C.A. |
|---|---|---|